# EUROPÄISCHE PATENTSCHRIFT

(11) **EP 3 289 160 B1**
(45) Veröffentlichungstag und Bekanntmachung des Hinweises auf die Patenterteilung: **24.07.2019**
(21) Anmeldenummer: 16722111.8
(22) Anmeldetag: 02.05.2016
(51) Int. Cl.: E06B 3/673, E06B 3/677, E06B 3/66

(54) **ZUSAMMENBAUPRESSE UND VERFAHREN ZUR HERSTELLUNG VON ISOLIERGLASELEMENTEN**
ASSEMBLY PRESS AND METHOD FOR PRODUCING INSULATING GLASS ELEMENTS
PRESSE D'ASSEMBLAGE ET PROCÉDÉ DE FABRICATION D'ÉLÉMENTS DE VITRAGE ISOLANT

(30) Priorität: 30.04.2015 DE 102015005612
(43) Veröffentlichungstag der Anmeldung: 07.03.2018
(73) Patentinhaber: LISEC Austria GmbH, 3353 Seitenstetten (AT)
(72) Erfinder: BAUER, Michael, 3352 St. Peter in der Au (AT); SCHREINER, Christian, 4441 Behamberg (AT); REICKERSDORFER, Andreas, 3353 Seitenstetten (AT)
(74) Vertreter: Henkel, Breuer & Partner
(86) Internationale Anmeldenummer: PCT/EP2016/059784
(87) Internationale Veröffentlichungsnummer: WO 2016/174268

(56) Entgegenhaltungen:
- WO-A1-03/014511
- WO-A1-2013/114302
- DE-A1- 19 909 638

## Beschreibung

Die Erfindung betrifft eine Zusammenbaupresse und ein Verfahren zur Herstellung von Isolierglaselementen mit mindestens zwei parallelen Scheiben, die über einen zwischen benachbarten Scheiben angeordneten Abstandhalter miteinander verbunden werden.

Isolierglaselemente werden typischerweise hergestellt, indem in einem ersten Schritt ein Abstandhalterrahmen oder ein Abstandhalterprofil rahmenartig an einer Fläche einer Glasscheibe angebracht und diese Baugruppe in einem weiteren Schritt mit einer weiteren Glasscheibe unter Druck zusammengefügt wird und das so gebildete Isolierglaselement anschließend um den gesamten Umfang herum mit einem Dichtmittel versehen wird. Gegebenenfalls wird vor dem Verbinden der Baugruppe mit der zweiten Glasscheibe der Scheibenzwischenraum evakuiert und/oder mit einem Füll- bzw. Schutzgas befüllt.

Isolierglaselemente dieser Art können grundsätzlich mit n Glasscheiben und n-1 Abstandhaltern gebildet werden, wobei n > 1 ist. Die derart zusammenzufügenden Glasscheiben sind nicht notwendig kongruent, so dass nicht alle Scheibenkanten eines Isolierglaselements miteinander fluchten. In diesem Fall spricht man von sogenannten "Stufenelementen", wobei ein Isolierglaselement mit mehr als zwei Scheiben auch mehrere derartige Stufen im Kantenbereich haben kann.

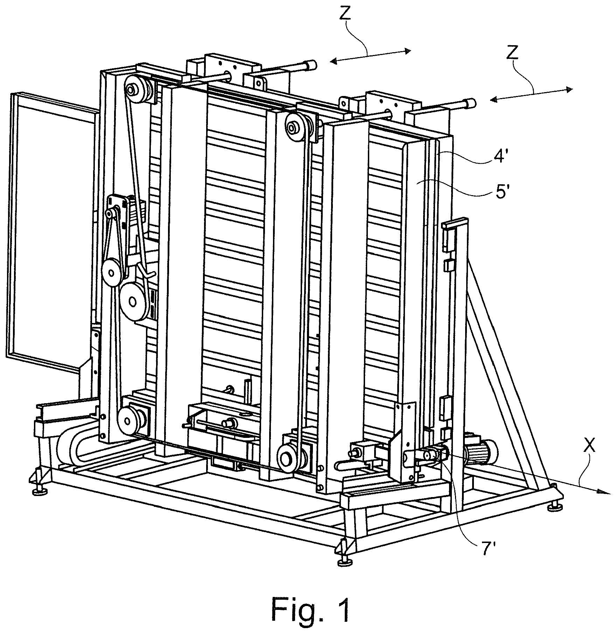

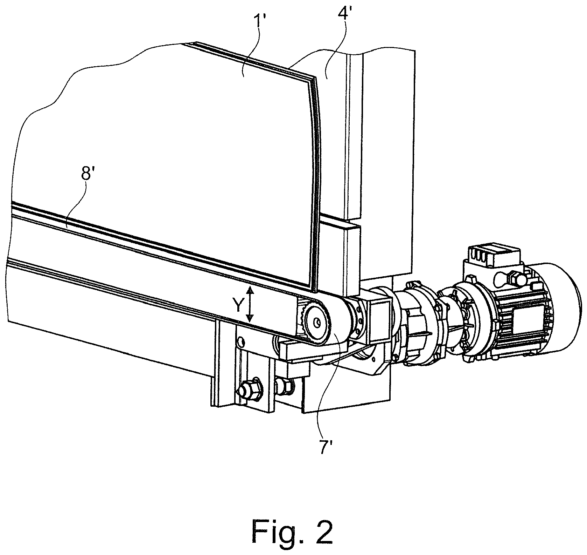

Eine Zusammenbaupresse zur Herstellung derartiger Isolierglaselemente, dabei auch von Stufenelementen, und ein auf der Anwendung der Zusammenbaupresse basierendes Verfahren sind aus der EP 2093370A2 bekannt. Die Zusammenbaupresse umfasst gemäß der Darstellung in der Figur 1 (zeigt eine perspektivische Gesamtansicht der Zusammenbaupresse) und der Figur 2 (zeigt eine vergrößerte Detaildarstellung des Bereichs mit Fördereinrichtung der Figur 1) zwei einander überliegend angeordnete Presselemente 4', 5', von denen eines (4') feststeht und das andere (5') relativ zu diesem in der Richtung Z sowie in der Höhe senkrecht zu der Richtung Z und der später noch beschriebenen Transportrichtung X bewegbar ist. Zwischen den Presselementen 4', 5' ist ein Arbeitsraum definiert, in dem die zum Isolierglaselement zu verbindenden Glasscheiben mit Abstandhalter entlang der Transportrichtung X eingebracht werden. Für diesen Transport ist eine dem feststehenden Presselement 4' zugeordnete Fördereinrichtung in Form eines Transportbandes 7' an der unter Seite des Arbeitsraums vorgesehen, deren Förderelement (das Förderband mit entsprechenden Antriebsrollen) in der Richtung Y senkrecht zu den Richtungen Z und X (d.h. in der Vertikalrichtung) verstellbar ist.

Das durch die Achsen Z, X und die dazu senkrechte Achse Y definierte Maschinen-Koordinatensystem kann insgesamt gegenüber der Horizontalen um einen Winkel von bis zu 6°C geneigt sein.

Das Zusammenbauen eines Isolierglaselements aus zwei oder mehreren Scheiben mit Abstandhalter erfolgt mit dieser Vorrichtung wie folgt:
Zunächst wird eine erste Glasscheibe, die von einer Transporteinrichtung an die Zusammenbaupresse herangeführt wird, in vertikaler Orientierung (oder bei einem gemäß vorstehender Beschreibung gekippten Maschinen-Koordinatensystem in gegenüber der Vertikalen leicht geneigter Orientierung) mittels der Bandfördereinrichtung 7' in den Arbeitsraum transportiert und gegen das feststehende Presselement 4' abgestellt. Dann wird das zweite, bewegliche Presselement 5' mittels entsprechender Antriebselemente gegen das feststehende Presselement 4' bewegt bis die Glasscheibe an dem beweglichen Presselement anliegt. In dieser Stellung wird die Glasscheibe von Saugeinrichtungen des beweglichen Presselements an diesem fixiert und zusätzlich auf einer Abstellleiste des Presselements abgestellt und es wird anschließend zusammen mit dem beweglichen Presselement 5' von dem feststehenden Presselement 4' wegbewegt. In den dadurch geöffneten Arbeitsraum wird anschließend die zweite Glasscheibe mit dem daran vorab angebrachten Abstandhalterrahmen, die ebenfalls über Transportmittel in vertikaler Orientierung herangeführt wird, wie zuvor die erste Glasscheibe mittels der Bandfördereinrichtung 7' in den Arbeitsraum transportiert und gegen das feststehende Presselement 4' abgestellt.

Im Folgenden wird der Arbeitsraum gegenüber der Umgebung abgedichtet und von der Unterseite im Bereich der Bandfördereinrichtung 7' mit einem Füllgas befüllt. Anschließend wird das bewegliche Presselement 5' mit der an diesem festgehaltenen ersten Glasscheibe gegen die an dem feststehenden Presselement 4' festgehaltenen zweiten Glasscheibe bewegt und mit dieser zusammengepresst, um das Isolierglaselement zu bilden.

Dieser Vorgang wird bei Isolierglaselementen mit mehr als zwei Glasscheiben gegebenenfalls wiederholt, indem der Arbeitsraum wieder geöffnet wird und jeweils eine weitere Glasscheibe mit aufgesetztem Abstandhalterrahmen in den Arbeitsraum transportiert und anschließend in entsprechender Weise mit der zuvor gebildeten Baugruppe, die mittels der Saugeinrichtung und der Abstellleiste an dem beweglichen Presselement 5' fixiert und von diesem gehalten wurde, zusammengepresst wird.

Stufenelemente werden dadurch produziert, dass das bewegliche Presselement 5' zusammen mit der jeweils daran durch die Saugeinrichtung festgehaltenen Glasscheibe eine hierfür erforderliche Distanz in der Richtung Y senkrecht zu den Richtungen Z und X bewegt wird, bevor die Glasscheiben zusammengepresst werden. Gegebenenfalls kann die vertikale Position der Unterkante der an dem feststehenden Presselement 4' festgehaltenen Glasscheibe auch durch Absenken der Bandfördereinrichtung 7' verändert werden, um Stufenelemente herzustellen.

Da nach erfolgter Verbindung der Glasscheiben nur die dem festen Presselement 4' zugeordnete Glasscheibe auf der Transporteinrichtung abgestützt ist und die dem beweglichen Presselement 5' zugeordnete Glasscheibe zumindest beim Austransport, wenn die Abstellleiste notwendigerweise außer Kontakt mit der Unterkante der Glasscheibe gebracht worden ist, verliert diese Glasscheibe die Unterstützung an der Unterseite (Unterkante), was zur Folge haben kann, dass diese Glasscheibe verrutscht oder sich von dem zuvor gebildeten Element ablöst, hinabfällt und zerbricht, was aufwendige Aufräumarbeiten erforderlich macht. Im Falle von Elementen, die aus mehr als zwei Glasscheiben gebildet werden, verliert nicht nur eine äußere Glasscheibe die Unterstützung, sondern es verlieren auch weitere zwischen den äußeren Glasscheiben eines mehrteiligen Isolierglaselements die Unterstützung..

Selbst wenn mit einer solchen bekannten Zusammenbaupresse das Isolierglaselement korrekt zusammengefügt wurde, besteht das Problem, dass insbesondere bei thermoplastischen extrudierten Abstandhaltern oder Abstandhaltern aus thermoplastischem Material oder aus zumindest teilweise elastischen Werkstoffen wie Metall oder Kunststoff die fehlende Scheibenabstützung an der Unterseite nach dem Zusammenfügen dazu führen kann, dass eine gewisse relative Verschiebung der Glasscheiben zueinander durch eine elastische Verformung und/oder Kriechvorgänge aufgrund von Scherkräften auftritt, solange der Randverbund des Isolierglaselements noch nicht ausreichend verfestigt ist. Während bei Isolierglaselementen mit kongruenten Glasscheiben ein zusätzliches Umsetzen des Elements auf die Fördereinrichtung, so dass beide Glasscheiben auf derselben stehen, eine gewisse Minderung des Problems ermöglichen kann, steht diese Maßnahme bei Stufenelementen nicht zur Verfügung.

Aus der WO 2013/114302A1 sind eine weitere Zusammenbaupresse und ein Verfahren zur Herstellung von Isolierglaselementen mit drei Glasscheiben bekannt, wobei die Zusammenbaupresse zwei Presselemente aufweist, die nur im Abstand zueinander - also in der Pressrichtung - verstellbar sind und die eine Bandfördereinrichtung besitzt, die insgesamt in der Pressrichtung der Presselemente verstellbar ist. Die Bandfördereinrichtung ist in der Horizontal- bzw. Querrichtung in drei separate Umlaufbänder unterteilt, die in der Horizontalrichtung in einem konstanten Abstand voneinander angeordnet sind und von denen eines in der vertikalen Richtung feststeht und zwei schmalere, angrenzende Bänder unabhängig voneinander in der Vertikalrichtung anhebbar sind, um nacheinander in den Arbeitsraum zwischen die Presselemente transportierte Glasscheiben eines Stufenelements gegenüber einer Transportebene der Bandfördereinrichtung vertikal nach oben zu versetzen, wo diese durch Saugeinrichtungen der Presselemente übernommen und festgehalten werden, sofern es sich um die beiden äußeren Glasscheiben des Isolierglaselements handelt. Allerdings werden auch bei dieser Zusammenbaupresse die schmalen Förderbänder nach dem Transport in dem Arbeitsraum und der Übernahme der vertikal angehobenen Glasscheiben durch die Presselemente wieder abgesenkt, sodass die entsprechenden vertikal angehobenen Glasscheiben nur noch durch Saugeinrichtungen an den Presselementen festgehalten sind. Die zwischen den beiden äußeren Glasscheiben angeordnete dritte Glasscheibe wird zwar durch das mittlere der Förderbänder während des Pressvorgangs an der Unterseite abgestützt und auf das angehobene Niveau der beiden äußeren Glasscheiben angehoben, allerdings wird das gesamte Isolierglaselement durch Absenken des mittleren Förderbandes nach dem Verpressen wieder auf das Niveau der Transportebene abgesenkt. Deshalb besteht auch hier das oben geschilderte Risiko einer Verschiebung der Position einzelner Glasscheiben eines Isolierglaselements (hier der beiden äußeren Glasscheiben) während des Zusammenbaus oder danach beim Absenken auf das Niveau der Transportebene aufgrund der Schwerkraft und der fehlenden Abstützung an der Unterseite, insbesondere bei schweren und großen Glasscheiben.

Aufgabe der Erfindung ist die Bereitstellung einer Zusammenbaupresse und eines Verfahrens zur Herstellung von Isolierglaselementen mit mindestens zwei parallelen Scheiben, die über mindestens einen zwischen benachbarten Scheiben angeordneten Abstandhalter miteinander verbunden werden, und die dahingehend verbessert sind, dass die Herstellung von Isolierglaselementen, insbesondere von Stufenelementen, auch bei hohen Massen zuverlässig und maßhaltig erfolgen kann.

Zur Lösung bringt die Erfindung eine Zusammenbaupresse gemäß Anspruch 1 und ein Verfahren zur Herstellung von Isolierglaselementen gemäß Anspruch 9 in Vorschlag. Bevorzugte Ausgestaltungen der Zusammenbaupresse und des Verfahrens sind in den abhängigen Ansprüchen angegeben.

Die Erfindung betrifft demnach eine Zusammenbaupresse zur Herstellung von Isolierglaselementen mit mindestens zwei parallelen Scheiben, die über mindestens einen zwischen benachbarten Scheiben angeordneten Abstandhalter miteinander verbunden werden, mit zwei einander gegenüberliegend angeordneten Presselementen, die zwischen sich einen Arbeitsraum definieren und deren Abstand voneinander in einer ersten Richtung (Z) verstellbar ist, um die im Arbeitsraum befindlichen Scheiben zur Bildung des Isolierglaselements zusammenzupressen, und einer Fördereinrichtung zum Transportieren der Scheiben an eine Arbeitsposition in den Arbeitsraum hinein und aus diesem heraus in einer zweiten Richtung (X), die zu der ersten Richtung (Z) senkrecht ist, wobei zumindest eines der Presselemente in einer dritten Richtung (Y), die senkrecht zu der ersten Richtung (Z) und der zweiten Richtung (X) ist, verstellbar ist, wobei die Fördereinrichtung mindestens zwei antreibbare Förderelemente besitzt, die jeweils ein Stützmittel zur Abstützung der Unterseite mindestens einer der mindestens zwei Scheiben während des Transportierens derselben in einer jeweiligen Transportebene aufweisen und die unabhängig voneinander so verstellbar sind, dass sich die durch die Stützmittel definierten Transportebenen an unterschiedlichen Positionen in der dritten Richtung (Y), die senkrecht zu der ersten Richtung (Z) und der zweiten Richtung (X) ist, befinden.

Die Erfindung betrifft auch ein Verfahren zur Herstellung von Isolierglaselementen mit mindestens zwei parallelen Scheiben, die über mindestens einen zwischen benachbarten Scheiben angeordneten Abstandhalter miteinander verbunden werden, mit den Schritten: Transportieren der Scheiben an eine Arbeitsposition in einem Arbeitsraum, der zwischen zwei einander gegenüberliegend angeordneten Presselementen, deren Abstand voneinander in einer ersten Richtung (Z) verstellbar ist, definiert ist, in einer zweiten Richtung (X), die zu der ersten Richtung (Z) senkrecht ist, wobei die Unterseiten der Scheiben während des Transportierens jeweils durch ein Stützmittel von Förderelementen einer Fördereinrichtung abgestützt werden, Verstellen der durch die Stützmittel der Förderelemente definierten Transportebenen relativ zueinander, indem mindestens eines der Stützmittel in einer dritten Richtung (Y), die senkrecht zu der ersten Richtung (Z) und der zweiten Richtung (X) ist, verstellt wird, Verstellen des Abstandes der Presselemente voneinander in der ersten Richtung (Z), um die im Arbeitsraum befindlichen Scheiben zur Bildung des Isolierglaselements zusammenzupressen, und Transportieren des Isolierglaselements aus dem Arbeitsraum heraus in der zweiten Richtung (X), wobei die Unterseiten der Scheiben während des Transportierens durch ein jeweiliges Stützmittel der Förderelemente abgestützt werden, wobei eines oder beide Förderelemente (7a,7b) zusammen mit dem jeweils angrenzenden Presselement (4,5) gekoppelt oder unabhängig davon aber synchron in der ersten Richtung und/oder in der dritten Richtung (Y) verstellt wird/werden.

Da sowohl bei der erfindungsgemäßen Zusammenbaupresse als auch gemäß dem Verfahren alle Glasscheiben eines Isolierglaselements mit zwei Glasscheiben, insbesondere eines Stufenelements, nicht nur während des Transports in den Arbeitsraum hinein und aus diesem heraus sondern auch in den Phasen mit Ausnahme einer kurzen Phase, in der diese durch die zusammengepressten Presselemente gehalten sind, stets an der Unterseite bzw. der Unterkante durch das jeweilige der Glasscheibe zugeordnete Stützmittel des Förderelements der Fördereinrichtung abgestützt werden, kann eine aufgrund von Schwerkräften bewirkte Verschiebung der Glasscheiben während des Zusammenbaus und auch danach, solange die Verbindung noch nicht gefestigt ist, sicher verhindert werden, selbst wenn die Massen der Glasscheiben hoch sind.

Außerdem eröffnet die Zuordnung eines eigenen Förderelements der Fördereinrichtung zu jeder der Glasscheiben in der Zusammenbaupresse die Möglichkeit, die Taktzeit zur Herstellung eines Isolierglaselements zu verkürzen, insbesondere im Vergleich zu einer Zusammenbaupresse der eingangs beschriebenen Bauart, bei der einzelne Glasscheiben auf Stützeinrichtungen der Presselemente abgestellt und nach dem Verpressen wieder abgehoben werden, um die Stützeinrichtungen für den Austransport zu entfernen.

Besonders vorteilhaft ist das erfindungsgemäße Verfahren bzw. die erfindungsgemäße Zusammenbaupresse bei Stufenelementen einsetzbar, die aus mehr als zwei Glasscheiben gebildet werden. Bei derartigen Stufenelementen, die aus beispielsweise zwei kleinen und einer großen Glasscheibe gebildet werden, muss nach dem aus dem Stand der Technik bekannten Verfahren in der Zusammenbaupresse eine Vorrichtung zum Heben des zusammengesetzten Halbelements aus den zwei kleinen Scheiben und dem dazwischenliegenden Abstandhalter vorhanden sein, wobei bei der Handhabung des Halbelements die Gefahr der Verschiebung der Glasscheiben zueinander aufgrund der Schwerkraftwirkung besteht, während dieses in der Zusammenbaupresse gehandhabt wird.

Vorzugsweise ist das Stützmittel durch eine Anordnung von Walzen oder Rollen oder ein Transportband oder einen Transportriemen oder eine Kombination davon gebildet. Besonders bevorzugt ist dabei ein Transportband oder ein Transportriemen, weil die großflächige durchgehende und in der Regel elastische Auflagefläche an den Unterseiten der Glasscheiben diese vor einer Beschädigung schützt.

Vorzugsweise ist eines der Förderelemente oder sind beide Förderelemente unabhängig voneinander und unabhängig von den Presselementen zusätzlich in der ersten Richtung (Z), also quer zu der Transportrichtung (X) verstellbar. Damit kann die Zusammenbaupresse an unterschiedliche breite Glasscheiben und Isolierglaselemente bzw. an Isolierglaselemente mit mehr als zwei Glasscheiben angepasst werden. Die Verstellbarkeit in der ersten Richtung (Z) ist auch zum Übergeben der Scheiben und zum Nachsetzen erforderlich.

Mindestens eines der beiden Förderelemente mit dem jeweils angrenzenden Presselement gekoppelt oder selektiv koppelbar, um zusammen mit diesem in der ersten Richtung (Z) und/oder in der dritten Richtung (Y) verstellbar zu sein. Bei dem Verfahren wird oder werden somit eines oder beide Förderelemente jeweils zusammen mit einem angrenzenden bzw. zugeordneten Presselement in der ersten Richtung (Z) und/oder in der dritten Richtung (Y) verstellt.

Eine Koppelung bedeutet in diesem Zusammenhang, dass das jeweilige Förderelement mit dem Presselement mechanisch so verbunden ist oder bei Bedarf verbunden werden kann, dass sich das Förderelement mit dem Presselement in der Y-Richtung und in der Z-Richtung mit dem Presselement mitbewegt, die Beweglichkeit des Förderelements relativ zum Presselement aber weiterhin gewährleistet ist. Die auf das Förderelement einwirkende Gewichtskraft wird dabei über das Presselement abgestützt. Ein Vorteil dieser Variante ist die einfachere Steuerung und größere mechanische Genauigkeit.

Durch die Koppelung der Förderelemente mit dem jeweils zugeordneten Presselement für den Pressvorgang und die gemeinsame Bewegung wird ein Schlupf zwischen den Unterseiten der Glasscheiben und der Auflagefläche der Stützmittel der Förderelemente und eine Beschädigung der Glasscheiben vermieden und der mechanische Antrieb ist vereinfacht, weil keine aufwändige Synchronisation des jeweiligen Antriebs des Presselements und des zugeordneten Förderelements erforderlich ist.

In einer alternativen Gestaltung ist mindestens eines der Förderelemente (oder alle Förderelemente der Zusammenbaupresse) unabhängig von aber synchron mit einem angrenzenden zugeordneten Presselement antreibbar, um zusammen mit diesem in der ersten Richtung (Z) und/oder in der dritten Richtung (Y) verstellbar zu sein. Die auf das Förderelement einwirkende Gewichtskraft wird bei dieser Variante nicht über das Presselement sondern direkt über die Maschinenbasis abgestützt. Vorzugsweise sind die Förderelemente der Fördereinrichtung mittels einer entsprechenden Funktion der Steuereinrichtung synchron miteinander antreibbar, vorzugsweise während sich die durch ihre jeweiligen Stützmittel definierten Transportebenen an unterschiedlichen Positionen in der dritten Richtung (Y) befinden. Mit dieser Ausgestaltung wird erreicht, dass ein zusammengebautes Stufenelement aus dem Arbeitsraum der Zusammenbaupresse heraustransportiert werden kann, während gleichzeitig alle Glasscheiben des Elements an der Unterseite abgestützt werden und dadurch eine relative Verschiebung der Glasscheiben bei noch nicht vollständig ausgehärtetem Randverbund vermieden wird. Die Synchronisierung der Antriebe gewährleistet, dass es nicht zu einem Schlupf zwischen dem Stützmittel des zugeordneten Förderelements und der Unterseite einer Glasscheibe kommt.

Vorzugsweise werden bei dem erfindungsgemäßen Verfahren die Scheiben nacheinander an die Arbeitsposition in dem Arbeitsraum transportiert und eine zuerst eintransportierte Scheibe wird von dem Stützmittel des einen der Förderelemente der Fördereinrichtung auf dem Stützmittel eines anderen der Förderelemente abgestellt bzw. umgesetzt, indem die zuerst eintransportierte Scheibe temporär von einem der Presselemente gehalten wird, während das andere der Förderelemente in der dritten Richtung Y und in der ersten Richtung Z unter die Glasscheibe bewegt wird.

Vorzugsweise sind bei dem erfindungsgemäßen Verfahren alle Scheiben des herzustellenden Isolierglaselements beim Transportieren in den Arbeitsraum hinein, während des Verpressens der Glasscheiben zur Bildung des Isolierglaselements im Arbeitsraum, und während des Transportierens des Isolierglaselements aus dem Arbeitsraum heraus stets von dem Stützmittel eines der Förderelemente an der Unterseite abgestützt und/oder durch die Presskraft der Presselemente gehalten. Dadurch wird gewährleistet, dass eine relative Verschiebung der Glasscheiben aufgrund der Schwerkraft nicht auftritt. Die Unterstützung der Unterseite der Glasscheiben durch wird Förderelemente wird im Prinzip nur für eine kurze Zeitspanne während des Herstellungsprozesses des Isolierglaselements unterbrochen, nämlich dann, wenn die jeweiligen Glasscheiben gerade mit dem Pressdruckdruck der Presselemente beaufschlagt sind und eine Verschiebung aufgrund dieser relativ hohen Druckkräfte nicht auftritt. In diese Phase wird eines oder es werden beide Förderelement(e) dann durch Bewegen in der Y-Richtung und in der Z-Richtung an eine andere Position unter der Unterseite der Glasscheiben umgesetzt, in der sie die Glasscheiben nach dem Öffnen der Presselemente wieder unterstützen.

Vorzugsweise sind die Antriebselemente zum Bewirken der Verstellung der Transportebene der Stützmittel der Förderelemente in der dritten Richtung (Y) und/oder zur Verstellung in der ersten Richtung (Z) aufgrund der Auswertung der Ausgabe eines oder mehrerer Sensors/Sensoren ansteuerbar, welche(r) zur Abtastung der Scheiben zur Bildung des Isolierglaselements und/oder eines diesen zugeordneten Datenträgers an einer Position in Transportrichtung vor dem Arbeitsraum angeordnet ist/sind. Dadurch kann die Zusammenbaupresse automatisch auf das jeweilige zu bearbeitende Isolierglaselement eingestellt und konfiguriert werden.

Das durch die Achsen Z (erste Richtung oder Zustellrichtung der Presselemente beim Zusammenpressen der Glasscheiben), X (zweite Richtung oder Transportrichtung der einzelnen Glasscheiben in den Arbeitsraum hinein und Transportrichtung des Isolierglaselements aus dem Arbeitsraum heraus) und Y (dritte Richtung oder Richtung senkrecht zu den ersten und zweiten Richtungen Z bzw. X) definierte orthogonale Maschinen-Koordinatensystem XYZ kann insgesamt, also unter Beibehaltung der Orthogonalität der Achsen zueinander, mitsamt der Fördereinrichtung, den Stützmitteln und den durch diese definierten Transportebenen und den Presselementen gegenüber der Horizontalen wie im Stand der Technik um bis zu 10°, vorzugsweise um bis zu 6° geneigt sein, indem es um die horizontale X-Achse gekippt wird, sodass die Glasscheiben, die an dem feststehenden Presselement angeordnet sind, gekippt gelagert sind und nicht in den Arbeitsraum hinein kippen. In diesem Fall kann die Glasscheibe gegebenenfalls auch ohne weitere Halteeinrichtungen, beispielsweise die im Stand der Technik vorgesehenen Saugvorrichtungen, an dem feststehenden Presselement durch Schwerkraft fixiert sein. Zusätzliche Halteeinrichtungen können aber gegebenenfalls vorgesehen werden.

Der Transport der Glasscheiben in den Arbeitsraum hinein und der Transport des Isolierglaselements aus dem Arbeitsraum heraus in der zweiten Richtung (X) kann jeweils mittels der Fördereinrichtung gleichsinnig oder gegensinnig erfolgen.

Vorzugsweise ist die Zusammenbaupresse mit einer Einrichtung zum Einbringen eines Füllgases, wie beispielsweise Argon, Krypton oder Xenon, in den Arbeitsraum und/oder einer Einrichtung zum Evakuieren des Arbeitsraums versehen. Bei dem Verfahren wird also vor dem und/oder während dem Verstellen des Abstandes der Presselemente voneinander in der ersten Richtung (Z), um die im Arbeitsraum befindlichen Scheiben zur Bildung des Isolierglaselements zusammenzupressen, ein Füllgas in den Arbeitsraum eingebracht oder der Arbeitsraum evakuiert. Es ist auch denkbar, den Arbeitsraum zuerst zumindest teilweise zu evakuieren und anschließend das Füllgas einzubringen. Mit dieser funktionalen Erweiterung kann der Scheibenzwischenraum des Isolierglaselements mit dem Füllgas befüllt bzw. evakuiert werden, solange die beiden Glasscheiben noch nicht oder noch nicht vollständig zusammengepresst sind. Die Befüllung des Arbeitsraums mit Füllgas während der horizontalen Bewegung kann zu einer weiteren Verkürzung der Taktzeit beitragen.

Im Folgenden wird die Erfindung nochmals anhand der beigefügten Zeichnung erläutert. Darin zeigen:
Fig. 1 eine perspektivische Gesamtansicht einer Zusammenbaupresse nach dem Stand der Technik,
Fig. 2 eine vergrößerte Detaildarstellung des Bereichs mit Fördereinrichtung der Figur 1,
Fig. 3 eine stark schematisierte Darstellung einer erfindungsgemäßen Zusammenbaupresse, und
Fig. 4 eine Ablaufsequenz zur Erläuterung der Herstellung eines 3-fach Isolierglaselements.

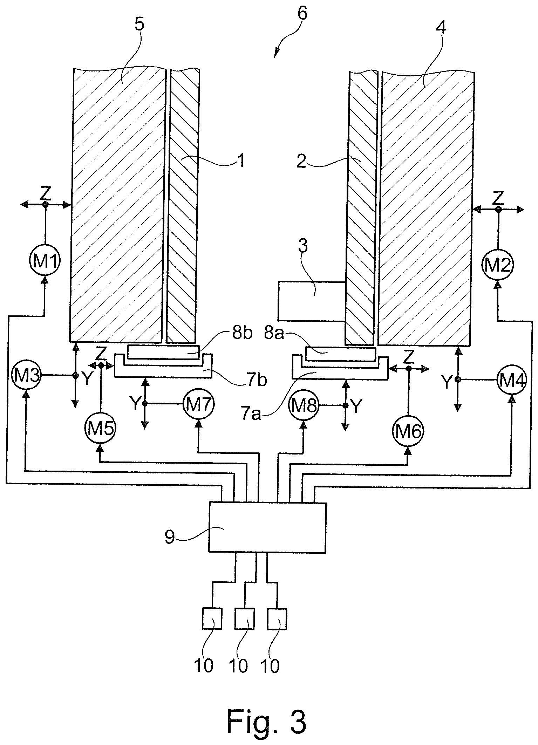

Die in Fig. 3 in stark schematisierter Darstellung gezeigte erfindungsgemäße Zusammenbaupresse zur Herstellung von Isolierglaselementen mit mindestens zwei parallelen Scheiben 1,2, die über einen zwischen benachbarten Scheiben 1,2 angeordneten Abstandhalter 3 miteinander verbunden werden, besitzt zwei einander gegenüberliegend angeordnete Presselemente 4,5, die zwischen sich einen Arbeitsraum 6 definieren und deren Abstand voneinander in einer ersten Richtung entlang einer ersten Achse Z des bereits anhand des Standes der Technik beschriebenen Maschinenkoordinatensystems mit den orthogonalen Achsen X, Y und Z mittels Antriebseinrichtungen M1,M2 verstellbar ist, um die im Arbeitsraum 6 befindlichen Scheiben 1,2 zur Bildung des Isolierglaselements zusammenzupressen. Hierbei kann eines der beiden Presselemente 4,5 wie im einleitend beschriebenen Stand der Technik prinzipiell feststehen und nur das zweite Presselement relativ zu dem feststehenden Presselement bewegbar ausgeführt sein. In diesem Fall kann beispielsweise die Antriebseinrichtung M2 entfallen. Die detaillierte Ausgestaltung der Antriebseinrichtung(en) des Presselements oder der beiden Presselemente kann beispielsweise wie bei der aus der EP2093370A2 bekannten Zusammenbaupresse realisiert werden. Zumindest eines der Presselemente (4,5) ist zusätzlich zu der Bewegung in der Richtung entlang bzw. parallel zu der Achse Z in der vertikalen Richtung entlang bzw. parallel zu der dritten Achse Y senkrecht dazu bewegbar (mittels Antriebseinrichtungen M3 bzw. M4), wobei die Bewegbarkeit zumindest eines der Presselemente in der Richtung der Z-Achse und in der Richtung der Y-Achse zusammen mit dem zugeordneten Förderelement von Bedeutung für die Herstellung von Stufenelementen ist. Die Antriebseinrichtung(en) M1,M2,M3,M4 des Presselements oder der Presselemente ist/sind mit einer zentralen Steuereinrichtung 9 verbunden.

Obwohl nicht dargestellt können die Presselemente 4,5 wie im Stand der Technik mit Unterdruckeinrichtungen versehen sein, die an der Kontaktfläche mit den Glasscheiben münden und dazu eingerichtet sind, die jeweilige Glasscheibe durch Unterdruck an der Pressfläche des Presselements zu fixieren. Da die erfindungsgemäße Zusammenbaupresse aber wie noch beschrieben werden wird für jede Glasscheibe (bzw. für jedes schon aus mehreren Glasscheiben zusammengesetzte Halbelement), also für jedes der beiden durch Zusammenpressen miteinander zu verbindenden Bauteile eine eigene Fördereinrichtung vorsieht, die die Unterseite des jeweiligen Bauteils sowohl während des Transports in den Arbeitsraum hinein als auch während des Transports aus dem Arbeitsraum heraus unterstützt, kann die Haltekraft solcher Unterdruckeinrichtungen geringer wie im Stand der Technik sein.

Die Zusammenbaupresse besitzt ferner eine Fördereinrichtung 7 zum Transportieren der Scheiben 1,2 zur Bildung des Isolierglaselements an eine Arbeitsposition in dem Arbeitsraum 6 und aus diesem heraus in der zweiten Richtung parallel zur Achse X, die zu der ersten Richtung Z (und zu der Blattebene in der Darstellung der Figur 3) senkrecht ist. Die Fördereinrichtung 7 weist mindestens zwei getrennt voneinander antreibbare Förderelemente 7a,7b auf, die jeweils ein Stützmittel 8a,8b zur Abstützung der Unterseite mindestens einer der mindestens zwei Scheiben 1,2 während des Transports und während des Zusammenpressens in einer jeweiligen Transportebene aufweisen. In der Darstellung ist das Stützmittel ein um in der Transportrichtung beabstandete Antriebswalzen herumgelegtes endloses Transportband oder ein Transport- oder Zahnriemen 8a,8b, von dem nur der obere Bandabschnitt des umlaufenden Transportbandes gezeigt ist (der untere Bandabschnitt ist weggelassen). Anstelle eines langen und durchgehenden Transportbandes können auch mehrere in Transportrichtung hintereinander angeordnete separate Transportbänder vorgesehen sein. Alternativ können die Förderelemente auch durch eine Anordnung von Walzen oder Rollen oder eine Kombination von Walzen, Rollen und/oder Transportbändern oder -riemen gebildet sein.

Ein wesentlicher Gesichtspunkt der Erfindung besteht darin, dass die Förderelemente 7a,7b unabhängig voneinander so verstellbar sind, dass sich die durch die Stützmittel (8a,8b) definierten Transportebenen an unterschiedlichen Positionen in einer dritten Richtung parallel zur Achse Y, die senkrecht zu der ersten und der zweiten Richtung ist, befinden. Hierzu ist für jedes der Förderelemente 7a,7b eine eigene Antriebseinrichtung M7,M8 vorgesehen, die mit der zentralen Steuereinrichtung 9 verbunden ist.

Eine weitere Antriebseinrichtung M5,M6 kann darüber hinaus für eines oder für mehrere bzw. jedes der Förderelemente 7a,7b vorgesehen sein, die ebenfalls mit der zentralen Steuereinrichtung 9 verbunden ist und die eine Verstellung des jeweiligen Förderelements 7a,7b unabhängig von anderen Förderelementen und von den Presselementen 4,5 zusätzlich in der ersten Richtung parallel zu der Achse Z ermöglicht.

Die Antriebseinrichtungen M7,M8,M5,M6 zum Bewirken der Verstellung der Transportebene der Stützmittel 8a,8b der Förderelemente 7a,7b in der dritten Richtung parallel zu der Achse Y und/oder zur Verstellung in der ersten Richtung parallel zu der Achse Z können durch die Steuereinrichtung 9 aufgrund der Auswertung der Ausgabe eines oder mehrerer Sensors/Sensoren 10 angesteuert werden, welche(r) die Scheiben zur Bildung des Isolierglaselements und/oder einen diesen zugeordneten Datenträger, beispielsweise ein Barcode oder ein drahtlos auslesbares digitales Speicherelement, an einer Position in Transportrichtung vor dem Arbeitsraum 6 abtasten und die zur Anpassung der Position der Förderelemente 7a,7b bzw. der Stützmittel 8a,8b und der durch diese definierten Transportebenen nötigen Steuerbefehle an die Antriebseinrichtungen M1-M8 zur Herstellung des jeweiligen Isolierglaselements auslösen.

In der schematischen Darstellung der Fig. 3 nicht gezeigt ist eine optional vorgesehene Einrichtung zum Einbringen eines Füllgases in den Arbeitsraum 6 und/oder eine Einrichtung zum Evakuieren des Arbeitsraums 6. Diese funktionale Erweiterung ist im Stand der Technik an sich bekannt, wobei derart erweiterte Zusammenbaupressen auch als "Gasfüllpressen" bezeichnet werden. Die Zufuhr des Füllgases oder die Evakuierung erfolgt vorzugsweise über den Raum zwischen zwei jeweils benachbarten Stützmitteln der Förderelemente von benachbarten Förderelementen der Fördereinrichtung, so dass der Scheibenzwischenraum des Isolierglaselements befüllt bzw. evakuiert werden kann, solange die beiden Glasscheiben noch nicht oder noch nicht vollständig zusammengepresst sind. Die Befüllung des Arbeitsraums mit Füllgas kann beispielsweise gleichzeitig mit der horizontalen Bewegung des Förderelements bzw. der Förderelemente erfolgen.

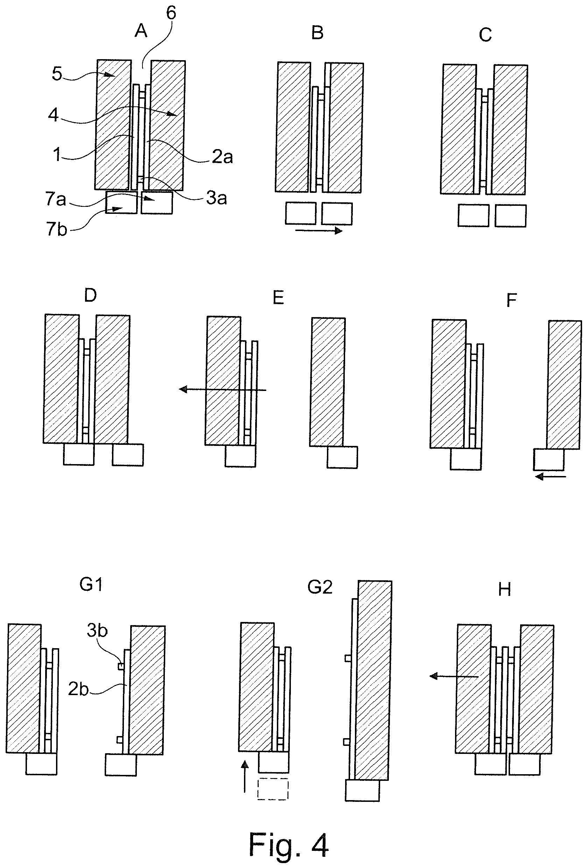

In der Figur 4 ist beispielhaft eine Abfolge von Bewegungen der Presselemente und der Förderelemente der erfindungsgemäßen Zusammenbaupresse zum Herstellen eines 3-fach Isolierglaselements mit kongruenten Glasscheiben oder als Stufenelement gezeigt, um die Möglichkeit der Bewegung der Förderelemente in der Z- und der Y-Richtung zum Zwecke des Nachsetzens unter die Glasschieben unabhängig von der Bewegung der Presselemente zu verdeutlichen.

Im Schritt A ist der Herstellungsprozess bereits so weit fortgeschritten, dass ein Halbelement aus zwei Glasscheiben 1,2a mit einem dazwischen angeordneten Abstandhalter 3a zusammengepresst ist. Die Förderelemente 7a,7b unterstützen dabei jeweils eine der Glasscheiben 1,2a als Endzustand eines vorausgegangen Ablaufs zur Herstellung des Halbelements mit der erfindungsgemäßen Zusammenbaupresse. Das Halbelement entspricht einem üblichen 2-fach Isolierglaselement mit kongruenten Glasscheiben und kann daher bereits ein Endprodukt darstellen. Die Herstellung erfolgt, indem zuerst eine erste Glasscheibe 1 über das Förderelement 7a in den Arbeitsraum transportiert wird, dort durch Zusammenpressen der Presselemente 4,5 kurzzeitig gehalten wird, um das Förderelement 7a in der Y-Richtung absenken und anschließend in der Z-Richtung wegbewegen zu können, um an dessen Stelle das Förderelement 7b unter die Unterseite der Glasscheibe 1 zu bewegen (durch Bewegen in der Z-Richtung und anschließend in der Y-Richtung unabhängig von dem Presselement 5). Die auf dem Förderelement 7b abgestützte Glasscheibe 1 wird dann zusammen mit dem Presselement 5 (synchron oder gekoppelt) in der Z-Richtung bewegt, um den Arbeitsraum zu öffnen. In diesen wird dann über das zwischenzeitlich wieder an die Position neben dem Presselement 4 bewegte Förderelement 7a die zweite Glasscheibe 2a, die den Abstandhalter trägt, welcher in einer vorgelagerten Station auf die Glasscheibe aufgebracht worden ist, in den Arbeitsraum bewegt und diese mit der ersten Glasscheibe verpresst, indem das Presselement 5 und das diesem zugeordnete Förderelement 7b mit der darauf abgestützten Glasscheibe 1 mechanisch gekoppelt oder synchron in der Z-Richtung bewegt wird. Dann ist der im Schritt A gezeigte Zustand erreicht.

Ist das Isolierglaselement hier fertiggestellt, wird das Presselement 5 unabhängig von dem zugeordneten Förderelement 7b in der Z-Richtung von dem feststehenden Presselement 4 wegbewegt, um die Presse zu öffnen, und dann wird das fertige Isolierglaselement durch die beiden Förderelemente 7a,7b unter gleichzeitiger Unterstützung der beiden Glasscheiben 1,2a aus dem Arbeitsraum heraustransportiert.

Bei der Herstellung eines 3-fach Isolierglaselements werden im Schritt B die Glasscheiben noch durch die Presskraft der Presselemente gehalten. Dadurch können die Förderelemente 7a,7b ohne Risiko einer relativen Verschiebung der Glasscheiben zunächst in der Y-Richtung bewegt und von der Unterseite der Glasscheiben wegbewegt werden. Anschließend werden die Förderelemente 7a,7b in einem Schritt C in der Z-Richtung bewegt und das Förderelement 7b wird unter den beiden Glasscheiben 1,2a des Halbelements positioniert.

Im Schritt D wird das Förderelement 7b in der Y-Richtung bewegt und angehoben, bis es die Unterseite der beiden Glasscheiben 1,2a abstützt. Im Schritt E werden die Presselemente 4,5 geöffnet, indem hier das linke Presselement 5 in der Z-Richtung von dem feststehenden Presselement 4 wegbewegt wird. Diese Bewegung des Presselements 5 in der Z-Richtung erfolgt, indem das zugeordnete Förderelement 7b mit dem Presselement 5 mechanisch gekoppelt ist und daher zusammen mit dem Presselement in der Z-Richtung bewegt wird. Alternativ ist eine synchrone Bewegung von Presselement 5 und Förderelement 7b in der Z-Richtung möglich. Während dieser Bewegung wird das Halbelement durch das Förderelement 7b abgestützt.

Im Schritt F wird das Förderelement 7a, das dem anderen Presselement 4, hier dem feststehenden Presselement zugeordnet ist, unabhängig von dem Presselement 4 und dem anderen Förderelement 7b in der Z-Richtung zum Arbeitsraum hin bewegt. Ggf. ist vor und/oder nach der Bewegung in der Z-Richtung eine Bewegung in der Y-Richtung nötig.

Im Schritt G1 wird die dritte Glasscheibe 2b mit daran vorab angebrachtem Abstandhalter 3b durch das Förderelement 7a in den Arbeitsraum 6 hinein transportiert (in der Richtung der Achse X). In der Endstellung wird sodann das Halbelement durch gekoppelte oder synchrone Bewegung des Presselements 5 mit dem zugeordneten Förderelement 7b in der Z-Richtung zum feststehenden Presselement 4 mit zugeordnetem Förderelement 7a bewegt und mit der durch dieses abgestützten Glasscheibe 2b verpresst. Anschließend wird in einem Schritt H das Presselement 5 ohne das zugeordnete Förderelement 7b von dem feststehenden Presselement 4 in der Z-Richtung wegbewegt, worauf das fertige Isolierglaselement unter Abstützung aller Glasscheiben 1,2a,2b durch die beiden Förderelemente 7b,7a aus dem Arbeitsraum transportiert werden kann.

Sofern das 3-fach Isolierglaselement als Stufenelement ausgebildet werden soll, wird in einem alternativen Schritt G2 eine dritte Glasscheibe 2b mit entsprechender Konfiguration in den Arbeitsraum 6 transportiert und gleichzeitig oder anschließend das Presselement 5 gekoppelt oder synchron mit dem zugeordneten Förderelement 7b und dem darauf abgestützten Halbelement in der Y-Richtung bewegt (abgesenkt oder bevorzugt angehoben) und dann mit der Glasscheibe 2b verpresst, indem das Presselement 5 gekoppelt oder synchron mit dem zugeordneten Förderelement 7b in der Z-Richtung zum feststehenden Presselement 4 bewegt wird. Anschließend wird auch in diesem Fall in einem Schritt H das Presselement 5 ohne das zugeordnete Förderelement 7b von dem feststehenden Presselement 4 in der Z-Richtung wegbewegt, worauf das fertige Stufen-Isolierglaselement unter Abstützung aller Glasscheiben 1,2a,2b durch die beiden Förderelemente 7b,7a aus dem Arbeitsraum transportiert werden kann.

Die erfindungsgemäß mögliche gekoppelte oder synchrone Bewegung des Presselements 5 mit dem zugeordneten Förderelement 7b in der Y-Richtung (z.B. im Schritt G2) bietet den Vorteil, dass eine Absenkung oder insbesondere eine Anhebung beider Elemente möglich ist, um unterschiedliche Stufenelemente herstellen zu können. Im Stand der Technik, bei dem nur das Förderelement in der Z-Richtung bewegt werden kann, ist diese Bewegung auf eine Absenkung beschränkt, weil der Bewegungsbereich nach oben durch das Presselement blockiert ist. Ein entsprechend schmales Förderelement könnte zwar ggf. an dem Presselement vorbei bewegt werden, würde dann aber die Glasscheiben beim Schließen der Presselemente nicht mehr abstützen können, sondern müsste nach der Übergabe der Glasscheibe wieder aus dem Arbeitsraum heraus bewegt und abgesenkt werden. Außerdem führt eine Vergrößerung des Abstandes von Presselement und Förderelement durch relative Absenkung zu einem Problem, dass das Presselement nicht mehr vollflächig an der Glasscheibe angreift, weil die Glasscheibe an der Unterseite über das Presselement nach unten vorsteht. Wenn das Presselement nicht bis zur Unterkante der Glasscheibe reicht, wird in einem Bereich keine ausreichende Presskraft auf den Abstandhalter ausgeübt, so dass dort kein dichter Randverbund entsteht. In bestimmten Fällen kann die Glasscheibe beim Zusammenpressen auch brechen, auch wenn das Förderelement zusammen mit dem Presselement in der Z-Richtung bewegt wird. Schließlich führt eine Vergrößerung des Abstandes zwischen dem Presselement und dem zugeordneten Förderelement zu Problemen bei der Abdichtung des Arbeitsraums der Zusammenbaupresse zum Befüllen mit Füllgas.
- 1,2,2a,2b: Glasscheiben
- 3,3a,3b: Abstandhalter
- 4,5: Presselemente
- 6: Arbeitsraum
- 7a,7b: Förderelemente
- 8a,8b: Stützmittel
- 9: Steuerung
- 10: Sensoren
- M1-M8: Antriebseinrichtungen

## Patentansprüche

1. Eine Zusammenbaupresse zur Herstellung von Isolierglaselementen mit mindestens zwei parallelen Scheiben (1,2), die über mindestens einen zwischen benachbarten Scheiben (1,2) angeordneten Abstandhalter (3) miteinander verbunden werden, mit
zwei einander gegenüberliegend angeordneten Presselementen (4,5), die zwischen sich einen Arbeitsraum (6) definieren und deren Abstand voneinander in einer ersten Richtung (Z) verstellbar ist, um die im Arbeitsraum (6) befindlichen Scheiben (1,2) zur Bildung des Isolierglaselements zusammenzupressen, und
einer Fördereinrichtung (7) zum Transportieren der Scheiben (1,2) an eine Arbeitsposition in den Arbeitsraum (6) hinein und aus diesem heraus in einer zweiten Richtung (X), die zu der ersten Richtung (Z) senkrecht ist,
wobei die Fördereinrichtung (7) mindestens zwei antreibbare Förderelemente (7a,7b) besitzt, die jeweils ein Stützmittel (8a,8b) zur Abstützung der Unterseite mindestens einer der mindestens zwei Scheiben (1,2) während des Transportierens derselben in einer jeweiligen Transportebene aufweisen und die unabhängig voneinander so verstellbar sind, dass sich die durch die Stützmittel (8a,8b) definierten Transportebenen an unterschiedlichen Positionen in einer dritten Richtung (Y), die senkrecht zu der ersten Richtung (Z) und der zweiten Richtung (X) ist, befinden, **dadurch gekennzeichnet, dass** zumindest eines der Presselemente (4,5) in der dritten Richtung (Y), die senkrecht zu der ersten Richtung (Z) und der zweiten Richtung (X) ist, verstellbar ist.

2. Eine Zusammenbaupresse gemäß Anspruch 1, wobei das Stützmittel (8a,8b) eine Anordnung von Walzen oder Rollen oder ein Transportband oder einen Transportriemen oder eine Kombination davon aufweist.

3. Eine Zusammenbaupresse gemäß Anspruch 1 oder 2, wobei eines der Förderelemente (7a,7b) oder beide Förderelemente unabhängig voneinander und unabhängig von den Presselementen (4,5) zusätzlich in der ersten Richtung (Z) verstellbar ist/sind.

4. Eine Zusammenbaupresse gemäß einem der Ansprüche 1 bis 3, wobei mindestens eines der beiden Förderelemente (7a,7b) mit dem jeweils angrenzenden Presselement (4,5) gekoppelt oder selektiv koppelbar ist, um zusammen mit diesem in der ersten Richtung (Z) und/oder in der dritten Richtung (Y) verstellbar zu sein.

5. Eine Zusammenbaupresse gemäß einem der Ansprüche 1 bis 3, wobei eines oder beide Förderelemente (7a,7b) unabhängig von aber synchron mit einem angrenzenden Presselement (4,5) antreibbar ist/sind, um zusammen mit diesem in der ersten Richtung (Z) und/oder in der dritten Richtung (Y) verstellbar zu sein.

6. Eine Zusammenbaupresse gemäß einem der vorstehenden Ansprüche, wobei die Förderelemente (7a,7b) der Fördereinrichtung (7) synchron miteinander antreibbar sind, vorzugsweise während sich die durch ihre jeweiligen Stützmittel (8a,8b) definierten Transportebenen an unterschiedlichen Positionen in der dritten Richtung (Y) befinden.

7. Eine Zusammenbaupresse gemäß einem der vorstehenden Ansprüche, wobei Antriebseinrichtungen (M) zum Bewirken der Verstellung der Transportebene der Stützmittel (8a,8b) der Förderelemente (7a,7b) in der dritten Richtung (Y) und/oder zur Verstellung in der ersten Richtung (Z) aufgrund der Auswertung der Ausgabe eines oder mehrerer Sensors/Sensoren (10) ansteuerbar sind, welche(r) zur Abtastung der Scheiben (1,2) zur Bildung des Isolierglaselements und/oder eines diesen zugeordneten Datenträgers an einer Position in Transportrichtung vor dem Arbeitsraum (6) angeordnet ist/sind.

8. Eine Zusammenbaupresse gemäß einem der vorstehenden Ansprüche, mit einer Einrichtung zum Einbringen eines Füllgases in den Arbeitsraum (6) und/oder einer Einrichtung zum Evakuieren des Arbeitsraums (6).

9. Ein Verfahren zur Herstellung von Isolierglaselementen mit mindestens zwei parallelen Scheiben (1,2), die über mindestens einen zwischen benachbarten Scheiben angeordneten Abstandhalter (3) miteinander verbunden werden, mit einer Zusammenbaupresse gemäß einem der Ansprüche 1 bis 8 und mit den Schritten:
Transportieren der Scheiben (1,2) an eine Arbeitsposition in einem Arbeitsraum (6), der zwischen zwei einander gegenüberliegend angeordneten Presselementen (4,5), deren Abstand voneinander in einer ersten Richtung (Z) verstellbar ist, definiert ist, in einer zweiten Richtung (X), die zu der ersten Richtung (Z) senkrecht ist, wobei die Unterseiten der Scheiben (1,2) während des Transportierens jeweils durch ein Stützmittel (8a,8b) von Förderelementen (7a,7b) einer Fördereinrichtung (7) abgestützt werden,
Verstellen der durch die Stützmittel (8a,8b) der Förderelemente (7a,7b) definierten Transportebenen relativ zueinander, indem mindestens eines der Stützmittel (8a,8b) in einer dritten Richtung (Y), die senkrecht zu der ersten Richtung (Z) und der zweiten Richtung (X) ist, verstellt wird,
Verstellen des Abstandes der Presselemente (4,5) voneinander in der ersten Richtung (Z), um die im Arbeitsraum (6) befindlichen Scheiben (1,2) zur Bildung des Isolierglaselements zusammenzupressen, und
Transportieren des Isolierglaselements aus dem Arbeitsraum (6) heraus in der zweiten Richtung (X), wobei die Unterseiten der Scheiben während des Transportierens durch ein jeweiliges Stützmittel (8a,8b) der Förderelemente (7a,7b) abgestützt werden,
wobei eines oder beide Förderelemente (7a,7b) zusammen mit dem jeweils angrenzenden Presselement (4,5) gekoppelt oder unabhängig davon aber synchron in der ersten Richtung (Z) und/oder in der dritten Richtung (Y) verstellt wird/werden.

10. Das Verfahren gemäß Anspruch 9, wobei die Scheiben (1,2) nacheinander an die Arbeitsposition in dem Arbeitsraum (6) transportiert werden und eine zuerst eintransportierte Scheibe (1,2) von dem Stützmittel (8a,8b) des einen der Förderelemente (7a,7b) der Fördereinrichtung (7) auf dem Stützmittel (8a,8b) eines anderen der Förderelemente (7a,7b) abgestellt wird, indem die zuerst eintransportierte Scheibe (1,2) temporär von einem der Presselemente (1,2) gehalten wird, während das andere der Förderelemente (7a,7b) in der dritten Richtung (Y) und in der ersten Richtung (Z) unter die Glasscheibe (1,2) bewegt wird.

11. Das Verfahren gemäß Anspruch 9 oder 10, wobei alle Scheiben (1,2) des herzustellenden Isolierglaselements beim Transportieren in den Arbeitsraum (6) hinein, während des Verpressens der Glasscheiben zur Bildung des Isolierglaselements im Arbeitsraum (6), und während des Transportierens des Isolierglaselements aus dem Arbeitsraum (6) heraus stets von dem Stützmittel (8a,8b) eines der Förderelemente (7a,7b) an der Unterseite abgestützt und/oder durch die Presskraft der Presselemente (4,5) gehalten sind.

12. Das Verfahren gemäß einem der Ansprüche 9 bis 11, wobei vor dem und/oder während dem Verstellen des Abstandes der Presselemente (4,5) voneinander in der ersten Richtung (Z), um die im Arbeitsraum (6) befindlichen Scheiben zur Bildung des Isolierglaselements zusammenzupressen, der Arbeitsraum (6) zumindest teilweise evakuiert und dann ein Füllgas in den Arbeitsraum (6) eingebracht wird.

## Claims

1. An assembly press for producing insulating glass elements with at least two parallel panes (1,2), which are connected together by means of at least one spacer (3), arranged between adjacent panes (1,2), comprising
two press elements (4,5), which are arranged opposite each other and which define a working chamber (6) between each other, wherein the spacing between them is adjustable in a first direction (Z), in order to press together the panes (1,2), located in the working chamber (6), to form the insulating glass element; and
a conveying device (7) for transporting the panes (1,2) into the working chamber (6) to a working position and out of the said working chamber in a second direction (X), which is perpendicular to the first direction (Z);
wherein the conveying device (7) has at least two drivable conveying elements (7a,7b), each having a support means (8a,8b) for supporting the lower face of at least one of the at least two panes (1,2) during transport of the same in a respective transport plane and which are adjustable, independently of each other, in such a way that the transport planes, defined by the support means (8a,8b), are located at different positions in a third direction (Y), which is perpendicular to the first direction (Z) and the second direction (X),
**characterized in that** at least one of the press elements (4,5) is adjustable in the third direction (Y), which is perpendicular to the first direction (Z) and the second direction (X).

2. An assembly press, as claimed in claim 1, wherein the support means (8a,8b) has an array of rolls or rollers or a transport band or a transport belt or a combination thereof.

3. An assembly press as claimed in claim 1 or 2, wherein one of the conveying elements (7a,7b) or both conveying elements is/are adjustable, independently of each other and independently of the press elements (4,5), additionally in the first direction (Z).

4. An assembly press as claimed in any one of the claims 1 to 3, wherein at least one of the two conveying elements (7a,7b) is coupled or is selectively couplable to the respective adjacent press element (4,5), in order to be adjustable together with the latter in the first direction (Z) and/or in the third direction (Y).

5. An assembly press as claimed in any one of the claims 1 to 3, wherein one or both conveying elements (7a,7b) can be driven independently of, but synchronously with an adjacent press element (4,5), in order to be adjustable together with the latter in the first direction (Z) and/or in the third direction (Y).

6. An assembly press as claimed in any one of the preceding claims, wherein the conveying elements (7a,7b) of the conveying device (7) can be driven synchronously with each other, preferably while the transport planes, defined by their respective support means (8a,8b), are located at different positions in the third direction (Y).

7. An assembly press as claimed in any one of the preceding claims, wherein drive devices (M) for causing the adjustment of the transport plane of the support means (8a,8b) of the conveying elements (7a,7b) in the third direction (Y) and/or for adjusting in the first direction (Z) based on the evaluation of the output of one or more sensors (10), which are arranged at a position in the transport direction in front of the working chamber (6), for scanning the panes (1,2) in order to form the insulating glass element, and/or a data carrier associated therewith.

8. An assembly press as claimed in any one of the preceding claims, comprising a device for introducing a fill gas into the working chamber (6) and/or a device for evacuating the working chamber (6).

9. A method for producing insulating glass elements with at least two parallel panes (1,2), which are connected together by means of at least one spacer (3), arranged between adjacent panes, by means of an assembly press according to any one of claims 1 to 8, comprising the steps of:
transporting the panes (1,2) to a working position in a working chamber (6), which is defined between two press elements (4,5), which are arranged opposite each other, wherein the spacing between said press elements is adjustable in a first direction (Z), in a second direction (X), which is perpendicular to the first direction (Z), wherein the lower faces of the panes (1,2) are supported in each case by means of a support means (8a,8b) by conveying elements (7a,7b) of a conveying device (7) during transport;
adjusting the transport planes, defined by the support means (8a,8b) of the conveying elements (7a,7b), relative to each other, by adjusting at least one of the support means (8a,8b) in a third direction (Y), which is perpendicular to the first direction (Z) and the second direction (X);
adjusting the distance between the press elements (4,5) in the first direction (Z), in order to press together the panes (1,2), located in the working chamber (6), in order to form the insulating glass element; and
transporting the insulating glass element out of the working chamber (6) in the second direction (X), wherein the lower faces of the panes are supported by a respective support means (8a,8b) of the conveying elements (7a,7b) during transport,
wherein one or both conveying elements (7a,7b) is/are coupled together with the respective adjacent press element (4,5) or are adjusted, independently thereof, but synchronously in the first direction (Z) and/or in the third direction (Y).

10. The method as claimed in claim 9,
wherein the panes (1,2) are transported one after the other to the working position in the working chamber (6); and an initially transported-in pane (1,2) is placed by the support means (8a,8b) of one of the conveying elements (7a,7b) of the conveying device (7) on the support means (8a,8b) of another of the conveying elements (7a,7b), in that the initially transported-in pane (1,2) is held temporarily by one of the press elements (1,2), while the other of the conveying elements (7a,7b) is moved in the third direction (Y) and in the first direction (Z) under the glass pane (1,2) .

11. The method as claimed in claim 9 or 10, wherein all of the panes (1,2) of the insulating glass element to be produced are always supported at the lower face by the support means (8a,8b) of one of the conveying elements (7a,7b) and/or are held by the pressing force of the press elements (4,5) while transporting into the working chamber (6), while pressing the glass panes to form the insulating glass element in the working chamber (6), and while transporting the insulating glass element out of the working chamber (6).

12. The method as claimed in any one of the claims 9 to 11, wherein before and/or during the adjustment of the distance between the press elements (4,5) in the first direction (Z), in order to press together the panes, located in the working chamber (6), to form the insulating glass element, the working chamber (6) is evacuated at least partially and then a fill gas is introduced into the working chamber (6).

## Revendications

1. Presse d'assemblage pour fabriquer des éléments de vitrage isolants ayant au moins deux vitres (1, 2) parallèles, qui sont reliées entre elles par au moins une entretoise (3), disposée entre des vitres (1, 2) voisines, comprenant
deux éléments (4, 5) de presse, qui sont disposés d'une manière opposés l'un à l'autre, qui définissent entre eux un espace (6) de travail et dont la distance, l'un par rapport à l'autre, est réglable dans un premier sens (Z), afin de presser ensemble les vitres (1, 2) se trouvant dans l'espace (6) de travail pour former l'élément de vitrage isolant et
un dispositif (7) de transport pour faire entrer les vitres (1, 2) en une position de travail dans l'espace (6) de travail et pour les en faire sortir dans une deuxième direction (X), qui est perpendiculaire à la première direction (Z),
le dispositif (7) de transport ayant au moins deux éléments (7a, 7b) de transport, qui peuvent être entraînés et qui ont chacun un moyen (8a, 8b) d'appui pour l'appui de la face inférieure d'au moins l'une des au moins deux vitres (1, 2) pendant son transport dans un plan respectif de transport et qui peuvent être déplacés indépendamment l'un de l'autre de manière à ce que les plans de transport définis par les moyens (8a, 8b) d'appui se trouvent dans des positions différentes dans une troisième direction (Y), qui est perpendiculaire à la première direction (Z) et à la deuxième direction (X),
**caractérisée en ce qu'**au moins l'un des éléments (4, 5) de la presse peut être déplacé dans la troisième direction (Y), qui est perpendiculaire à la première direction (Z) et à la deuxième direction (X).

2. Presse d'assemblage suivant la revendication 1, dans laquelle le moyen (8a, 8b) d'appui ont un agencement de cylindres ou de rouleaux ou une bande de transport ou une courroie de transport ou l'une de leurs combinaisons.

3. Presse d'assemblage suivant la revendication 1 ou 2, dans laquelle l'un des éléments (7a, 7b) de transport ou les deux éléments de transport est/ou sont déplaçables supplémentairement dans la première direction (Z), indépendamment l'un de l'autre et indépendamment des éléments (4, 5) de la presse.

4. Presse d'assemblage suivant l'une des revendications 1 à 3, dans laquelle au moins l'un des deux éléments (7a, 7b) de transport est accouplé à l'élément (4, 5) de la presse, respectivement, voisin ou peut l'être sélectivement pour être, ensemble avec celui-ci, déplaçable dans la première direction (Z) et/ou dans la troisième direction (Y).

5. Presse d'assemblage suivant l'une des revendications 1 à 3, dans laquelle l'un ou les deux éléments (7a, 7b) de transport peut/peuvent être entraînés indépendamment d'un élément (4, 5) de la presse voisin, mais en synchronisme avec lui, afin de pouvoir être déplacés ensemble avec celui-ci dans la première direction (Z) et/ou dans la troisième direction (Y) .

6. Presse d'assemblage suivant l'une des revendications précédentes, dans laquelle les éléments (7a, 7b) de transport du dispositif (7) de transport peuvent être entraînés en synchronisme entre eux, de préférence pendant que les plans de transport définis par leurs moyens (8a, 8b) d'appui respectifs se trouvent en des positions différentes dans la troisième direction (Y).

7. Presse d'assemblage suivant l'une des revendications précédentes, dans laquelle des dispositifs (M) d'entraînement peuvent être commandés pour provoquer le déplacement du plan de transport des moyens (8a, 8b) d'appui des éléments (7a, 7b) de transport dans la troisième direction (Y) et/ou pour le déplacement dans la première direction (Z) sur la base de l'exploitation du signal de sortie d'un capteur ou de plusieurs capteurs (10), qui, pour détecter les vitres (1, 2) de formation de l'élément de vitrage isolant et/ou d'un support de données associé à ceux-ci, est/sont disposés dans une position dans le sens de transport avant l'espace (6) de travail.

8. Presse d'assemblage suivant l'une des revendications précédentes, comprenant un dispositif pour mettre un gaz de remplissage dans l'espace (6) de travail et/ou un dispositif pour faire le vide dans l'espace (6) de travail.

9. Procédé de production d'éléments de vitrage isolants, comprenant au moins deux vitres (1, 2) parallèles, qui sont reliées entre elles par au moins une entretoise (3) disposée entre des vitres voisines, par une presse d'assemblage suivant l'une des revendications 1 à 8 et comprenant les stades :
on fait entrer les vitres (1, 2) en une position de travail dans un espace (6) de travail, qui est défini entre deux éléments (4, 5) de la presse, qui sont disposés en opposition l'un à l'autre et dont la distance l'un par rapport à l'autre, dans une première direction (Z), est réglable suivant une deuxième direction (X), qui est perpendiculaire à la première direction (Z), les faces inférieures des vitres (1, 2) étant, pendant le transport, appuyées chacune par un moyen (8a, 8b) d'appui d'éléments (7a, 7b) de transport d'un dispositif (7) de transport,
on déplace, l'un par rapport à l'autre, les plans de transport définis par les moyens (8a, 8b) d'appui des éléments (7a, 7b) de transport en déplaçant au moins l'un des moyens (8a, 8b) d'appui dans une troisième direction (Y), qui est perpendiculaire à la première direction (Z) et à la deuxième direction (X),
on règle la distance entre les éléments (4, 5) de la presse dans la première direction (Z), pour presser ensemble les vitres (1, 2) se trouvant dans l'espace (6) de travail, afin de former l'élément de vitrage isolant et
on fait sortir l'élément de vitrage isolant de l'espace (6) de travail dans la deuxième direction (X), les faces inférieures des vitres étant, pendant le transport, appuyées par un moyen (8a, 8b) d'appui respectif des éléments (7a, 7b) de transport,
dans lequel on accouple la ou les deux éléments (7a, 7b) de transport ensemble avec l'élément (4, 5) de la presse voisin respectif ou on le/les déplace indépendamment de cela, mais en synchronisme, dans la première direction (Z) et/ou dans la troisième direction (Y).

10. Procédé suivant la revendication 9, dans lequel on fait entrer les vitres (1, 2), l'une après l'autre, en la position de travail dans l'espace (6) de travail et on dépose une vitre (1, 2), que l'on a fait entrer d'abord, par le moyen (8a, 8b) d'appui de l'un des éléments (7a, 7b) de transport du dispositif (7) de transport, sur le moyen (8a, 8b) d'appui d'un autre des éléments (7a, 7b) de transport, en maintenant la vitre (1, 2), que l'on a fait entrer d'abord temporairement, par l'un des éléments (1, 2) de la presse, tandis que l'on déplace l'autre des éléments (7a, 7b) de transport dans la troisième direction (Y) et dans la première direction (Z), en le mettant sous la vitre (1, 2).

11. Procédé suivant la revendication 9 ou 10, dans lequel toutes les vitres (1, 2) de l'élément de vitrage isolant à fabriquer sont, lors de l'entrée dans l'espace (6) de travail, pendant que l'on presse les vitres pour former l'élément de vitrage isolant dans l'espace (6) de travail et pendant que l'on sort l'élément de vitrage isolant de l'espace (6) de travail, toujours appuyées sur la face inférieure par le moyen (8a, 8b) d'appui de l'un des éléments (7a, 7b) de transport et/ou sont maintenues par la force de presse des éléments (4, 5) de la presse.

12. Procédé suivant l'une des revendications 9 à 11, dans lequel avant et/ou pendant le réglage de la distance entre les éléments (4, 5) de la presse entre eux suivant la première direction (Z), afin de presser ensemble les vitres, se trouvant dans l'espace (6) de travail, pour former l'élément de vitrage isolant, on fait le vide, au moins en partie, dans l'espace (6) de travail et on introduit ensuite un gaz de remplissage dans l'espace (6) de travail.
